# EUROPEAN PATENT APPLICATION

(11) **EP 3 641 246 A1**
(43) Date of publication of application: **22.04.2020**
(21) Application number: 18816555.9
(22) Date of filing: 14.06.2018
(51) Int. Cl.: H04L 12/761, H04L 12/715

(54) **MULTICAST DOMAIN CROSSING METHOD, DEVICE AND SYSTEM AND COMPUTER READABLE STORAGE MEDIUM**

(30) Priority: 15.06.2017 CN 201710451348
(71) Applicant: ZTE Corporation, Shenzhen, Guangdong 518057 (CN)
(72) Inventor: PENG, Shaofu, Shenzhen Guangdong 518057 (CN); JIN, Feicai, Shenzhen Guangdong 518057 (CN); XU, Benchong, Shenzhen Guangdong 518057 (CN); FANG, Changqi, Shenzhen Guangdong 518057 (CN)
(74) Representative: Aipex B.V.
(86) International application number: PCT/CN2018/091332
(87) International publication number: WO 2018/228490

(57) **Abstract**

The present application discloses a multicast domain crossing method, device and system, and a computer readable storage medium, relating to the technical field of communications. The method comprises: dividing nodes in each domain of a multi-domain network into a multicast proxy node and a normal node; transmitting by the normal node a subscription request to a multicast source node outside the domain by means of the multicast proxy node inside the domain; transmitting by the multicast source node a bit index explicit replication (BIER) multicast message obtained through BIER encapsulation to the multicast proxy node; and transmitting by the multicast proxy node the BIER multicast message to the normal node.

## Description

### TECHNICAL FIELD

The present disclosure relates to the field of communications and, for example, to a multicast cross-domain method, device and system, and a computer-readable storage medium.

### BACKGROUND

Bit indexed explicit replication (BIER) describes a new architecture for forwarding multicast data messages, provides an optimal path for forwarding the multicast data messages in a multicast domain, and there is no need to establish a multicast distribution tree with a protocol and to maintain any stream state with an intermediate node. When a multicast message arrives at a bit-forwarding ingress router (BFIR) from the outside domain, the BFIR determines a bit indexed explicit replication sub-domain (BIER SD) where the multicast message will be sent and bit-forwarding egress routers (BFER) to which the multicast message will be sent. The BFIR inserts a BIER header into a message header, where the BIER header includes a BitString and each bit of the BitString represents a bit-forwarding router identifier (BFR-id) of the corresponding BFER. Draft-ietf-bier-mvpn-05 describes a public network bearing method for a BIER public network tunnel (P-tunnel) as a multicast virtual private network (MVPN), does not particularly improve an MVPN-related cross-domain method, and only describes that each segment of the P-tunnel may be in a BIER type, that is, the BIER is restricted to carry multicast traffic only in a single interior gateway protocol (IGP) domain. Draft-ietf-bier-idr-extensions-02 defines a method for notifying the BFR-id through a border gateway protocol (BGP). Practically the method is mainly applied to a network only deployed with the BGP rather than the IGP and emphasizes that information such as a router and the BFR-id may be notified through an internal border gateway protocol (IBGP) instead of the IGP in the domain. However, the BFR-id is not notified by default in an external border gateway protocol (EBGP) session, and a BIER-based cross-domain solution is to be further discussed.

### SUMMARY

The following is a summary of the subject matter described herein in detail. This summary is not intended to limit the scope of the claims.

The present disclosure provides a multicast cross-domain method, device and system, and a computer-readable storage medium, in which a multicast proxy node is configured to assist a node in transmitting cross-domain data, thereby implementing a multicast data cross-domain transmission under conditions of an MVPN across domains, and a BIER domain touching a non-BIER domain.

The present disclosure adopts the solutions described below.

An embodiment of the present disclosure provides a multicast cross-domain method. The method includes steps described below.

Nodes in each domain of a multi-domain network are divided into a multicast proxy node and common nodes.

The common node sends a subscription request to a multicast source node outside the each domain through the multicast proxy node in the each domain, and the multicast source node sends a bit indexed explicit replication (BIER) multicast message obtained through BIER encapsulation to the multicast proxy node.

The multicast proxy node sends the BIER multicast message to the common node.

In an embodiment, the step of dividing the nodes in the each domain of the multi-domain network into the multicast proxy node and the common node includes steps describe below.

A domain border node is selected as the multicast proxy node, nodes other than the multicast proxy node in the each domain are taken as the common nodes, and a node number is configured for the multicast proxy node.

Other the node number is notified to nodes in the each domain and a border node in a neighboring domain.

In an embodiment, the step in which the common node sends the subscription request to the multicast source node outside the each domain through the multicast proxy node in the each domain and the multicast source node sends the BIER multicast message obtained through the BIER encapsulation to the multicast proxy node includes steps described below.

Whether the common node is in a same domain as the multicast source node subscribed by the common node is determined.

If the common node is not in the same domain as the multicast source node subscribed by the common node, operations below are performed.

The common node initiates the subscription request to the multicast proxy node, where the subscription request includes multicast source information and information about the multicast proxy node.

The multicast proxy node receives the subscription request and sends the subscription request to the multicast source node through a border gateway protocol (BGP) as a multicast receiving end. The multicast source node encapsulates a multicast stream to be sent into the BIER multicast message, where a BIER header of the BIER multicast message includes bit information of the multicast proxy node.

In an embodiment, the step in which the multicast proxy node sends the BIER multicast message to the common node includes steps described below.

The multicast proxy node receives the BIER multicast message, strips the BIER header from the BIER multicast message, and sends the multicast message without the BIER header to the common node.

An embodiment of the present disclosure provides a multicast cross-domain device. The device includes a proxy configuration module, a cross-domain request module and a message sending module.

The proxy configuration module is configured to divide nodes in each domain of a multi-domain network into a multicast proxy node and common nodes.

The cross-domain request module is configured to send a subscription request to a multicast source node outside the each domain by the common node through the multicast proxy node in the each domain, and send a bit indexed explicit replication (BIER) multicast message obtained through BIER encapsulation to the multicast proxy node by the multicast source node.

The message sending module is configured to send the BIER multicast message to the common node through the multicast proxy node.

In an embodiment, the proxy configuration module includes a dividing unit and a notification unit. The dividing unit is configured to select a domain border node as the multicast proxy node, take nodes other than the multicast proxy node in the each domain as the common nodes, and configure a node number for the multicast proxy node.

The notification unit is configured to notify the node number to other nodes in the each domain and a border node in a neighboring domain.

In an embodiment, the cross-domain request module includes a determination unit, a first request unit, a second request unit and an encapsulation feedback unit.

The determination unit is configured to determine whether the common node is in a same domain as the multicast source node subscribed by the common node.

The first request unit is configured to: when the common node is not in the same domain as the multicast source node subscribed by the common node, initiate the subscription request to the multicast proxy node through the common node, where the subscription request includes multicast source information and information about the multicast proxy node.

The second request unit is configured to: after the multicast proxy node receives the subscription request, send the subscription request to the multicast source node by the multicast proxy node through a border gateway protocol (BGP) as a multicast receiving end.

The encapsulation feedback unit is configured to encapsulate a multicast stream to be sent into the BIER multicast message through the multicast source node, where a BIER header of the BIER multicast message includes bit information of the multicast proxy node.

In an embodiment, the message sending module is configured to: after the multicast proxy node receives the BIER multicast message, strip the BIER header from the BIER multicast message through the multicast proxy node and send the multicast message without the BIER header to the common node through the multicast proxy node .

An embodiment of the present disclosure provides a sensor data acquisition system. The system includes a memory, a processor and at least one application stored in the memory and configured to be executed by the processor, where the at least one application is configured to perform the sensor data acquisition method described above.

An embodiment of the present disclosure provides a computer-readable storage medium which is configured to store computer programs for implementing the sensor data acquisition method described above when the computer programs are executed by a processor.

The embodiments of the present disclosure provide the multicast cross-domain method, device and system, and the computer-readable storage medium. The method includes the following steps: the nodes in the each domain of the multi-domain network are divided into the multicast proxy node and the common nodes; the common node sends the subscription request to the multicast source node outside the each domain through the multicast proxy node in the each domain; the multicast source node sends the BIER multicast message obtained through the BIER encapsulation to the multicast proxy node; and the multicast proxy node sends the BIER multicast message to the common node. The multicast proxy node is configured to assist the node in transmitting the cross-domain data, thereby implementing the multicast data cross-domain transmission under the conditions of the MVPN across domains, and the BIER domain touching the non-BIER domain.

Other aspects can be understood after the drawings and the detailed description are read and understood.

### BRIEF DESCRIPTION OF DRAWINGS

FIG. 1 is a flowchart of a multicast cross-domain method according to embodiment one of the present disclosure;
FIG. 2 is a method flowchart illustrating the step S10 in FIG. 1;
FIG. 3 is a method flowchart illustrating the step S20 in FIG. 1;
FIG. 4 is a topological diagram of a network across IGP ASs according to embodiment one of the present disclosure;
FIG. 5 is a schematic diagram of a Proxy-Source Attribute Type-Length-Value (TLV) guide message according to embodiment one of the present disclosure;
FIG. 6 is a schematic diagram of a P-Multicast route message according to embodiment one of the present disclosure;
FIG. 7 is a topological diagram of a network across BGP Autonomous Systems (ASs) according to embodiment two of the present disclosure;
FIG. 8 is a topological diagram of an MVPN across BGP ASs according to embodiment three of the present disclosure;
FIG. 9 is an exemplary block diagram of a multicast cross-domain device according to embodiment four of the present disclosure;
FIG. 10 is an exemplary block diagram of a proxy configuration module in FIG. 9; and
FIG. 11 is an exemplary block diagram of a cross-domain request module in FIG. 9.

### DETAILED DESCRIPTION

The present disclosure will be described below in detail in conjunction with the drawings and embodiments. It is to be understood that the specific embodiments described herein are intended to explain and not to limit the present disclosure.

### Embodiment one

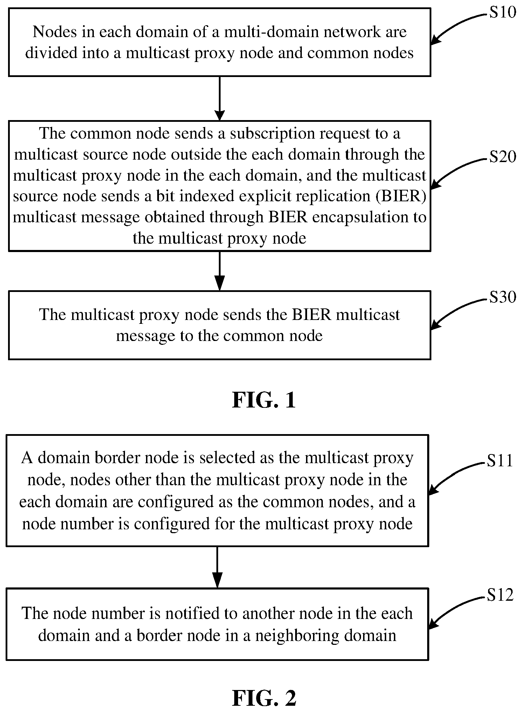

As shown in FIG. 1, in this embodiment, a multicast cross-domain method includes step S10, step S20 and step S30.

In step S10, nodes in each domain of a multi-domain network are divided into a multicast proxy node and common nodes.

In step S20, the common node sends a subscription request to a multicast source node outside the each domain through the multicast proxy node in the each domain, and the multicast source node sends a bit indexed explicit replication (BIER) multicast message obtained through BIER encapsulation to the multicast proxy node.

In step S30, the multicast proxy node sends the BIER multicast message to the common node. In this embodiment, the multicast proxy node is configured to assist a node in transmitting cross-domain data, implementing a multicast data cross-domain transmission under conditions of an MVPN across domains, and a BIER domain touching a non-BIER domain.

In this embodiment, the domain is a set composed of a group of hosts and routers using a same routing protocol. The domain may be an autonomous system (AS) in a border gateway protocol (BGP) or an area in an interior gateway protocol (IGP).

As shown in FIG. 2, in this embodiment, step S10 includes step S11 and step S12.

In step S11, a domain border node is selected as the multicast proxy node, a node other than the multicast proxy node in the domain is configured as the common node, and a node number is configured for the multicast proxy node.

In step S12, the node number is notified to other nodes in the domain and a border node in a neighboring domain.

In an embodiment, the multicast proxy node may be one or more nodes. Generally, the domain border node is selected as a BIER multicast proxy node, and another border node in the domain and a neighboring border node in the neighboring domain will be notified of a BFR-id of the BIER multicast proxy node through the BGP. When a multicast receiving end in the domain subscribes to a multicast source/group outside the domain, the multicast receiving end may initiate a subscription to the BIER multicast proxy node in the domain. The BIER multicast proxy node sends a subscription message to the practical multicast source node through the BGP as the multicast receiving end, and maintains a specific multicast service state in the domain. When the multicast source sends the BIER multicast message obtained through the BIER encapsulation, a BIER header includes bit information of each BIER multicast proxy node. After the BIER multicast proxy node receives the multicast message, the BIER multicast proxy node does not upload the multicast message to a control plane, but directly strips the BIER header and forwards the multicast message without the BIER header based on lower-layer encapsulation and a routing table.

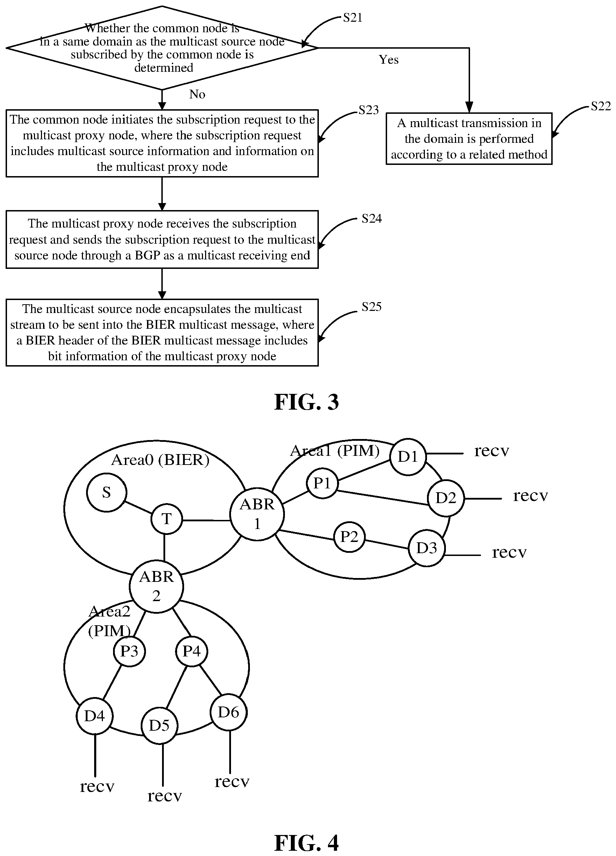

As shown in FIG. 3, in this embodiment, step S20 includes step 21, step S22, step S23, step S24 and step S25.

In step S21, whether the common node is in a same domain as the multicast source node subscribed by the common node is determined; if the common node is in the same domain as the multicast source node, step S22 is performed in which a multicast transmission in the domain is performed according to a related method.

If the common node is not in the same domain as the multicast source node, step S23, step S24 and step S25 are performed.

In step S23, the common node initiates the subscription request to the multicast proxy node, where the subscription request includes multicast source information and information about the multicast proxy node.

In step S24, the multicast proxy node receives the subscription request and sends the subscription request to the multicast source node through the BGP as the multicast receiving end.

In step S25, the multicast source node encapsulates a multicast stream to be sent into the BIER multicast message, where the BIER header of the BIER multicast message includes the bit information of the multicast proxy node.

In an embodiment, the step in which the multicast proxy node sends the BIER multicast message to the common node includes steps described below.

The multicast proxy node receives the BIER multicast message, strips the BIER header from the BIER multicast message, and sends the multicast message without the BIER header to the common node.

In an embodiment, the method may be applied to a plurality of scenarios including the MVPN across domains, the BIER domain touching the non-BIER domain, and the like.

FIG. 4 is a topological diagram of a network across IGP ASs, where an area0 is upgraded to support the BIER, and an area1 and an area2 support a protocol independent multicast (PIM) and do not support the BIER. The area0, the area1, and the area2 are three domains of the multi-domain network. The area 0 touches the area1 and an area border router 1 (ABR1) is shared. The area0 touches the area2 and an ABR2 is shared. Under the condition of the BIER domain touching the non-BIER domain, a domain border node at a touching point may be selected as the multicast proxy node. Nodes D1 to D6 are common nodes and a node S is the multicast source node.

It is assumed that the nodes D1 to D6 each need to subscribe to a multicast service (S, G) from the node S. A specific process is described below.

The ABR1 of the area1 and the ABR2 of the area2 are configured as the BIER multicast proxy nodes of a BIER sub-domain 0. A BIER sub-domain may have a large range that spans a plurality of ASs/areas. The area 0 belongs to the BIER sub-domain 0. BFR-ids of the ABR1 and the ABR2 will be flooded in the area0 through the IGP. In this embodiment, the BFR-ids of the BIER multicast proxy nodes do not need to be additionally notified among area border routers through the BGP.

The ABR1 and the ABR2 generate bit index forwarding table (BIFT) entries with their own BFR-ids as a key value separately in a BIFT in the context of the BIER sub-domain 0, where forwarding information included in the BIFT entries represents a local hit and an upload to the control plane. Meanwhile, a proxy flag is also set. (It is to be noted that the proxy flag means that a copied message to be locally uploaded is practically stripped of the BIER header and forwarded based on the lower-layer encapsulation and the routing table, and finally, the message may not be uploaded to the control plane but is forwarded to a proxy client. This may occur when only the proxy client, rather than an application on the control plane of the node, subscribes to the multicast service).

When the nodes D1 to D6 dispersed in the area1 and the area2 each sense that the multicast source node S is not in the area1 and the area2, the nodes D1 to D6 may initiate a PIM join message to the BIER multicast proxy node ABR1 (or ABR2), that is, the PIM join message still includes the true (S, G) and also includes a Proxy-Source Attribute Type-Length-Value (TLV) guide message which is sent to the proxy node ABR1 (or ABR2) along a reverse path forwarding (RPF) path to the proxy node ABR1 (or ABR2). After the PIM join message arrives at the proxy node ABR1 (or ABR2), the ABR1 (or the ABR2) checks that the Proxy-Source Attribute TLV included in the PIM join message indicates the ABR1 (or the ABR2) itself, the ABR1 (or the ABR2) terminates the PIM join message and sends a P-Multicast route including (S, G) information to the source node S through the BGP. In the P-Multicast route, an Originating Router's IP Addr is set to the ABR1 (or the ABR2), a Tunnel Type field in a P-Multicast Service Interface Tunnel Attribute (PTA) is set to the BIER, and a Tunnel Identifier field is set to {BIER sub-domain 0, S}.

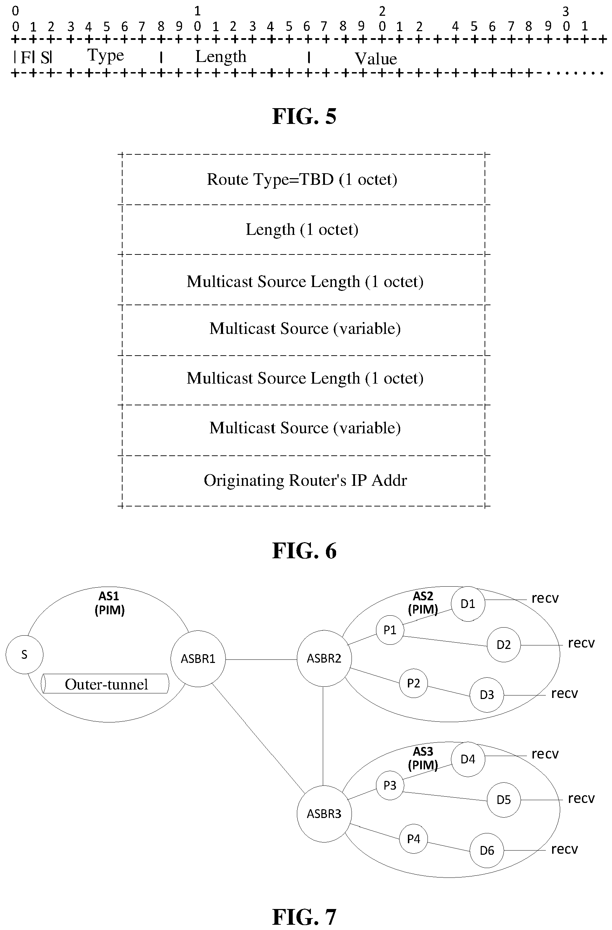

In this embodiment, the Proxy-Source Attribute TLV guide message refers to a message with a TLV format and the TLV format includes a type, a length, and a value. FIG. 5 is a schematic diagram of the Proxy-Source Attribute TLV guide message. Definitions of fields of the Proxy-Source Attribute TLV are similar to those of a Vector Attribute Type-Length-Value (TLV) defined in RFC 5496 and the Proxy-Source Attribute TLV is configured for guiding the PIM join message to be sent to the proxy node along the RPF path to the proxy node. However, different from the Vector Attribute TLV defined in the RFC 5496, the PIM join message including the Proxy-Source Attribute TLV will be terminated after the PIM join message reaches the proxy node, and will not be sent to the multicast source node along the RPF path to the multicast source node, but the proxy node will uniformly send the subscription message (which has not been sent before) to the multicast source node (or a reflector) through the BGP.

The ABR1 will maintain a multicast state (S, G) with an egress interface list {P1, P2}, and the ABR2 will maintain a multicast state (S, G) with an egress interface list { P3, P4 }. It is to be noted that if an application on the ABR1 has subscribed to the multicast service (S, G), the multicast state (S, G) maintained by the ABR1 includes not only the egress interface list but also a local application identifier. The node S receives the P-Multicast route from the ABR1 and the ABR2 separately, and senses that the ABR1 and the ABR2 are each interested in the multicast service (S, G) according to the Originating Router' S IP Addr and the PTA included in the P-Multicast route, and maintains a multicast state (S, G) with a BFER list {ABR1, ABR2} in the context of the BIER sub-domain 0.

In this embodiment, the P-Multicast route is a route type newly added in Multicast-Virtual Private Network Nerwork Layer Reachability Information (MCAST-VPN NLRI) defined in RFC 6514 and is configured for a P-Multicast join notification. A Multicast Source field is set to an Internet Protocol (IP) of a P-Multicast source, a Multicast Group field is set to an IP of a P-Multicast group, and a Originating Router's IP Addr field is set to an originating node sending the P-Multicast route. The P-Multicast route may include the PTA, where the Tunnel Type field may be set to the BIER, and the Tunnel Identifier field is set to a corresponding {BIER sub-domain ID, BFIR-prefix}.

FIG. 6 is a schematic diagram of a P-Multicast route message.

The node S sends the multicast message encapsulated through the BIER in the BIER sub-domain 0, and in a BitString in the BIER header, a Bit-Position corresponding to BFR-id-ABR1 and a Bit-Position corresponding to BFR-id-ABR2 will be set.

The message will be sent to an IGP next hop, a node T according to a conventional BIER forwarding procedure, and after receiving the message, the node T continues to send the message to the ABR1 and the ABR2 according to the BIER forwarding procedure. Details are not described here again.

After receiving the message encapsulated through the BIER, the ABR1 will hit the BIFT entry with its own BFR-id as the key value and copy a BIER message for the upload. Because the proxy flag is included in the hit BIFT entry, the ABR1 stripes the BIER header from the copied BIER message, queries the multicast service state (S, G) based on lower-layer multicast IP header encapsulation, and copies the message to the egress interface list {P1, P2} (it is to be noted that if the application on the ABR1 has subscribed to the multicast service (S, G), the message will also be locally uploaded to the control plane). In addition, because the received message encapsulated through the BIER does not include other BFERs, forwarding of the original BIER message will be terminated.

Similarly, after receiving the message encapsulated through the BIER, the ABR2 will strip the BIER header from the message encapsulated through the BIER and copy the message without the BIER header to the egress interface list {P3, P4}.

### Embodiment two

FIG. 7 is a topological diagram of a network across BGP ASs, where a border node of each AS has been upgraded to support BIER, and an internal node of each AS supports PIM and does not support the BIER. An AS1, an AS2 and an AS3 are three domains of a multi-domain network, and an AS border router 1 (ASBR1), an ASBR2 and an ASBR3 are multicast proxy nodes of the AS1, the AS2 and the AS3, respectively. Nodes D1 to D6 are common nodes, and a node S is a multicast source node.

It is assumed that the nodes D1 to D6 each need to subscribe to a multicast service (S, G) from the node S. A specific process is described below.

The ASBR2 of the AS2 and the ABSR3 of the AS3 are configured as BIER multicast proxy nodes of a BIER sub-domain 1. The ASBR2 or the ASBR3 will notify another border node in the AS2 or the AS3 and a neighboring border node in a neighboring AS of their own BFR-ids in the BIER sub-domain 1 through a BGP. In this embodiment, the ASBR2 will notify the ASBR1/ASBR3 of its own BFR-id information through an EBGP, and the ASBR3 will also notify the ASBR1/ASBR2 of its own BFR-id information through the EBGP. After receiving the BFR-id information, the ASBR1 changes itself as a next hop and continue to notify the node S of the BFR-id information through an IBGP.

The ASBR2 and the ASBR3 generate BIFT entries with their own BFR-ids as a key value separately in the context of the BIER sub-domain 1, where forwarding information included in the BIFT entries represents a local hit and an upload to a control plane. Meanwhile, a proxy flag is also set. In addition, the ASBR1 also generates BIFT entries with BFR-id-ASBR2 and BFR-id-ASBR3 as key values separately in the context of the BIER sub-domain 1, where forwarding information included in the BIFT entries will guide the message to be forwarded to the ASBR2 and the ASBR3 separately.

When the nodes D1 to D6 dispersed in the AS2 and the AS3 each sense that the multicast source node S is not located in the AS2 and the AS3, the nodes D1 to D6 may initiate a PIM join message to the BIER multicast proxy node ASBR2 (or ASBR3), that is, the PIM join message still includes the true (S, G) and also includes a Proxy-Source Attribute TLV guide message which is sent to the proxy node ASBR2 (or ASBR3) along an RPF path to the proxy node ASBR2 (or ASBR3). After the PIM join message reaches at the proxy node ASBR2 (or ASBR3), the ASBR2 (or the ASBR3) checks that the Proxy-Source Attribute TLV included in the PIM join message indicates the ASBR2 (or ASBR3) itself, the ASBR2 (or ASBR3) terminates the PIM join message and sends a P-Multicast route including (S, G) information to the source node S through the BGP. In the P-Multicast route, an Originating Router' S IP Addr is set to the ASBR2 (or the ASBR3), a Tunnel Type field in a PTA is set to the BIER, and a Tunnel Identifier field is set to {BIER sub-domain 1, S }. It is to be noted that the ASBR2 (or the ASBR3) may also determine the ASBR1 as a upstream multicast hop (UMH) to the node S, and send the P-Multicast route to the ASBR1 instead of directly sending the P-Multicast route to the node S. After the ASBR1 receives the P-Multicast route, the ASBR1 maintains information unchanged and sends it to the node S. In this embodiment, it is assumed that this manner is adopted.

The ASBR2 will maintain a multicast state (S, G) with an egress interface list {P1, P2 }, and the ASBR3 will maintain a multicast state (S, G) with an egress interface list of {P3, P4 }.

The node S will receive the P-Multicast route sent by the ASBR2 and the ASBR3 separately from the ASBR1, and sense that the ASBR2 and the ASBR3 are each interested in the multicast service (S, G) according to the Originating Router' S IP Addr and the PTA included in the P-Multicast route, and maintain a multicast state (S, G) with a BFER list {ASBR2, ASBR3} in the context of the BIER sub-domain 1.

The node S sends a multicast message encapsulated through the BIER in the BIER sub-domain 1, and in a BitString in a BIER header, a Bit-Position corresponding to BFR-id-ASBR1 and a Bit-Position corresponding to BFR-id-ASBR2 will be set.

The message will be sent to a remote BGP next hop, the ASBR1 node according to a conventional BIER forwarding procedure (It is to be noted that an outer unicast tunnel needs to be encapsulated), and after receiving the message, the ASBR1 node continues to send the message to the ASBR2 and the ASBR3 according to the BIER forwarding procedure after receiving the message. Details are not described here again.

After receiving the message obtained through the BIER encapsulation, the ASBR2 will hit the BIFT entry with its own BFR-id as the key value and copy the message for the upload. Because the proxy flag is included in the hit BIFT entry, the ASBR2 stripes the BIER header from the copied message, queries the multicast service state (S, G) based on lower-layer multicast IP header encapsulation, and copies the message to the egress interface list {P1, P2}. In addition, because the received message encapsulated through the BIER does not include other BFERs, forwarding of the original BIER message will be terminated.

Similarly, after receiving the message encapsulated through the BIER, the ASBR3 will strip the BIER header from the message and copy the message without the BIER header to the egress interface list {P3, P4}.

### Embodiment three

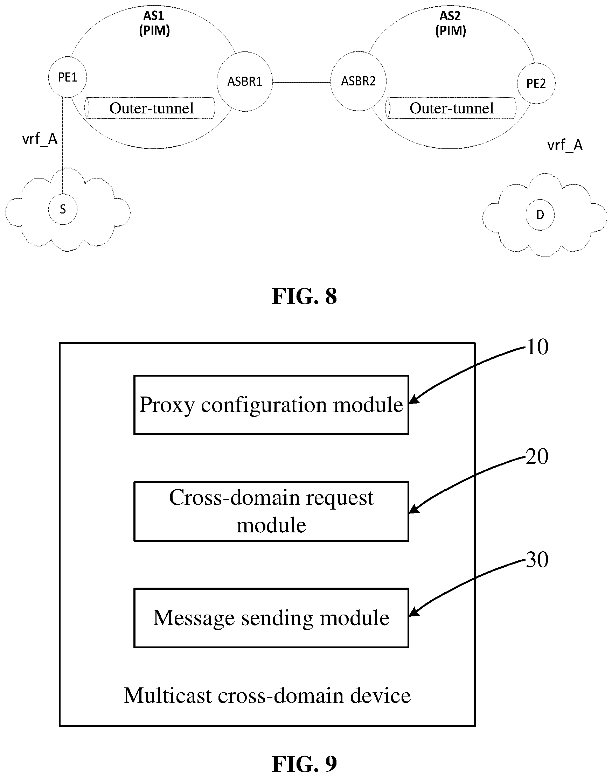

FIG. 8 is a topological diagram of an MVPN across BGP ASs, where a border node of each AS has been upgraded to support BIER, and an internal node of each AS supports PIM and does not support the BIER. An AS1 and an AS2 are two domains of a multi-domain network, an ASBR1 and an ASBR2 are multicast proxy nodes of the AS1 and the AS2, respectively. A node D is a common node, and a node S is a multicast source node.

It is assumed that the node D in a private network client on a PE2 side needs to subscribe to a multicast service (S, G) of the node S in a private network client on a PE1 side. A specific process is described below.

A border node PE2 of the AS2 is configured as a BIER multicast proxy node in a BIER sub-domain 2. The PE2 will notify another border node in the AS2 and a neighboring border node in a neighboring AS of its own BFR-id in the BIER sub-domain 2 through a BGP. In this embodiment, the PE2 will notify the ASBR2 of its BFR-id information through an IBGP. After receiving the BFR-id information, the ASBR2 changes itself as a next hop and continues to notify the ASBR1 of the BFR-id information through an EBGP. After receiving the BFR-id information, ASBR1 changes itself as a next hop and continues to notify the PE1 of the BFR-id information through the IBGP.

The PE2 generates a BIFT entry with its own BFR-id as a key value in the context of the BIER sub-domain 2, where forwarding information included in the BIFT entry represents a local hit and an upload to a control plane. Meanwhile a proxy flag is also set. In addition, the ASBR2 also generates a BIFT entry with BFR-id-PE2 as the key value in the context of the BIER sub-domain 2, where forwarding information included in the BIFT entry will guide the message to be forwarded to a remote BGP next hop, the PE2 (an outer unicast tunnel needs to be encapsulated). Similarly, the PE1 and the ASBR1 also generate the BIFT entry with the BFR-id-PE2 as the key value.

According to a processing flow defined in RFC 6514 and draft-ietf-BIER-mvpn-05, the PE1 may directly send a Selective P-Multicast Service Interface auto-discovery (S-PMSI A-D) route including a PTA corresponding to (vrf_A, S, G)and a Multi-Protocol Label Switching (MPLS) upstream-assigned label for identifying VRF_A to the PE2, where a Tunnel Type field in the PTA is set to the BIER and a Tunnel Identifier field is set to {BIER sub-domain 2, S}. The PE2 may also directly respond to the PE1 with a Leaf auto-discovery (A-D) route to notify that the PE2 is interested in (vrf_A, S, G). In contrast to the draft-ietf-BIER-mvpn-05, this embodiment directly adopts a method based on cross-domain BIER (i.e., the BIER sub-domain itself cross ASs) rather than a method based on a segmented P-tunnel with the BIER as a local segment.

The PE2 will maintain the multicast state (vrf_A, S, G) with an egress interface list {D}.

The PE1 receives the leaf A-D route from the PE1, senses that the PE2 is interested in the multicast service (vrf_A, S, G) according to an Originating Router' S IP Addr and the PTA included in the leaf A-D route, and maintains a multicast state (S, G) including a BFER list {PE2} in the context of the BIER sub-domain 2.

After receiving a multicast stream from a vrf_A private network client, the PE1 performs BIER encapsulation on the multicast stream and sends the multicast stream in the BIER sub-domain 2, where in a BitSring in a BIER header, a Bit-Position corresponding to the BFR-id-PE2 will be set.

The message will be sent to a remote BGP next hop, the ASBR1 according to a conventional BIER forwarding procedure (it is to be noted that the outer unicast tunnel needs to be encapsulated), the ASBR1 continues to send the message to the ASBR2 according to the BIER forwarding procedure after receiving the message, and the ASBR2 continues to send the message to the PE2 according to the BIER forwarding procedure after receiving the message. Details are not described here again.

After receiving the message encapsulated through the BIER, the PE2 will hit the BIFT entry with it own BFR-id as the key value and copy the message for the upload. Because the hit BIFT entry includes the proxy flag, the PE2 strips the BIER header from the copied message, queries vrf_A based on lower-layer encapsulation of the MPLS upstream-assigned label and queries the multicast service state (S, G) in the vrf_A instance based on the lower-layer encapsulation, and copy the message to the egress interface list {D}. In addition, because the received message encapsulated through the BIER does not include other BFERs, forwarding of the original BIER message will be terminated.

### Embodiment four

As shown in FIG. 9, in this embodiment, a multicast cross-domain device includes a proxy configuration module 10, a cross-domain request module 20 and a message sending module 30. The proxy configuration module 10 is configured to divide nodes in each domain of a multi-domain network into a multicast proxy node and a common node.

The cross-domain request module 20 is configured to enable the common node to send a subscription request to a multicast source node outside the each domain through the multicast proxy node in the each domain, and enable the multicast source node to send a bit indexed explicit replication (BIER) multicast message obtained through BIER encapsulation to the multicast proxy node.

The message sending module 30 is configured to enable the multicast proxy node to send the BIER multicast message to the common node.

In this embodiment, the multicast proxy node is configured to assist a node in transmitting cross-domain data, implementing a multicast data cross-domain transmission under conditions of an MVPN across domains, and a BIER domain touching a non-BIER domain.

In this embodiment, the domain is a set composed of a group of hosts and routers using a same routing protocol. The domain may be an autonomous system (AS) in a border gateway protocol (BGP) or an area in an interior gateway protocol (IGP).

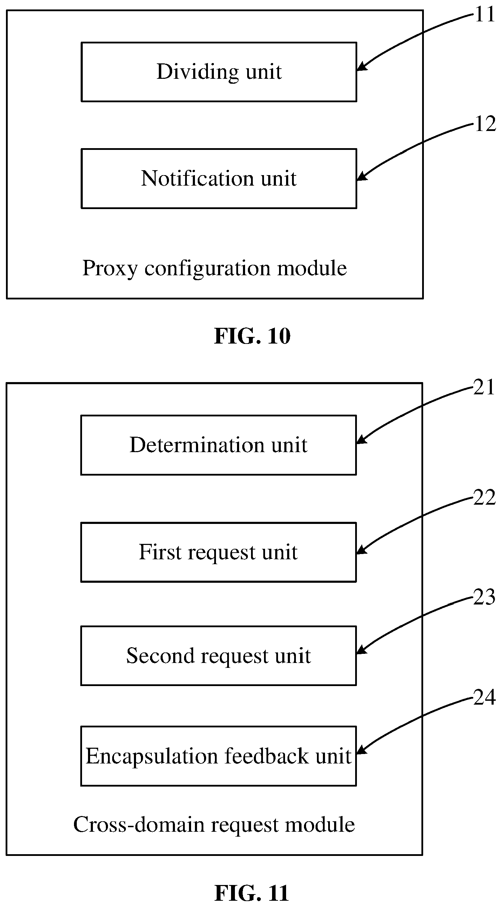

As shown in FIG. 10, in this embodiment, the proxy configuration module includes a dividing unit 11 and a notification unit 12.

The dividing unit 11 is configured to select a domain border node as the multicast proxy node, take a node other than the multicast proxy node in the each domain as the common node, and configure a node number for the multicast proxy node.

The notification unit 12 is configured to notify the node number to another node in the each domain and a border node in a neighboring domain.

In this embodiment, the multicast proxy node may be one or more nodes. Generally, the domain border node is selected as a BIER multicast proxy node, and another border node in the domain and a neighboring border node in a neighboring domain will be notified of a BFR-id of the BIER multicast proxy node through the BGP. When a multicast receiving end in the domain subscribes to a multicast source/group outside the domain, the multicast receiving end may initiate a subscription to the BIER multicast proxy node in the domain. The BIER multicast proxy node sends a subscription message to the practical multicast source node through the BGP as the multicast receiving end, and maintains a specific multicast service state in the domain. When the multicast source sends the multicast message encapsulated through the BIER, a BIER header includes bit information of each BIER multicast proxy node. After the BIER multicast proxy node receives the multicast message, the BIER multicast proxy node does not upload the multicast message to a control plane, but directly strips the BIER header and forwards the multicast message without the BIER header based on lower-layer encapsulation and a routing table.

As shown in FIG. 11, in this embodiment, the cross-domain request module includes a determination unit 21, a first request unit 22, a second request unit 23 and an encapsulation feedback unit 24.

The determination unit 21 is configured to determine whether the common node is in a same domain as the multicast source node subscribed by the common node.

The first request unit 22 is configured to: when the common node is not in the same domain as the multicast source node subscribed by the common node, enable the common node to initiate the subscription request to the multicast proxy node, where the subscription request includes multicast source information and information about the multicast proxy node.

The second request unit 23 is configured to: after the multicast proxy node receives the subscription request, enable the multicast proxy node to send the subscription request to the multicast source node through a border gateway protocol (BGP) as a multicast receiving end. The encapsulation feedback unit 24 is configured to enable the multicast source node to encapsulate a multicast stream to be sent into the BIER multicast message, where the BIER header of the BIER multicast message includes bit information of the multicast proxy node.

In this embodiment, the message sending module is configured to: after the multicast proxy node receives the BIER multicast message, enable the multicast proxy node to strip the BIER header from the BIER multicast message and send the multicast message without the BIER header to the common node.

In this embodiment, the method may be applied to a plurality of scenarios including the MVPN across domains, the BIER domain touching the non-BIER domain, and the like.

### Embodiment 5

This embodiment provides a sensor data acquisition system. The system includes a memory, a processor and at least one application stored in the memory and configured to be executed by the processor, where the application is configured to execute the sensor data acquisition methods according to the embodiments 1 to 3.

### Embodiment 6

An embodiment of the present disclosure provides a computer-readable storage medium, which is configured to store computer programs for implementing any one of the method embodiments among the sensor data acquisition method embodiments described above when the computer programs are executed by a processor.

It is to be noted that the embodiments of the device, system, and computer-readable storage medium have the same concept as the method embodiments, the specific implementation processes thereof are referred to the method embodiments for details, and the technical features in the method embodiments are applicable to the device embodiment, which are not described in detail herein. The embodiments of the present disclosure provide the multicast cross-domain method, device and system, and the computer-readable storage medium. The method includes the following steps: the nodes in the each domain of the multi-domain network are divided into the multicast proxy node and the common node; the common node sends the subscription request to the multicast source node outside the each domain through the multicast proxy node in the each domain; the multicast source node sends the BIER multicast message obtained through the BIER encapsulation to the multicast proxy node; and the multicast proxy node sends the BIER multicast message to the common node. The multicast proxy node is configured to assist the node in transmitting the cross-domain data, thereby implementing the multicast data cross-domain transmission under the conditions of the MVPN across domains, and the BIER domain touching the non-BIER domain.

From the description of the embodiments described above, it will be apparent to those skilled in the art that the method in the embodiments described above may be implemented by software plus a necessary general-purpose hardware platform, or may of course be implemented by hardware. Based on this understanding, the technical solutions in the present disclosure may be embodied in the form of a software product. The computer software product is stored in a storage medium (such as a read-only memory (ROM)/random access memory (RAM), a magnetic disk or an optical disk) and includes several instructions for enabling a terminal apparatus (which may be a mobile phone, a computer, a server, an air-conditioner, a network apparatus or the like) to execute the method according to each embodiment of the present disclosure.

## Claims

1. A multicast cross-domain method, comprising:
dividing nodes in each domain of a multi-domain network into a multicast proxy node and common nodes;
sending, by one common node of the common nodes, a subscription request to a multicast source node outside the each domain through the multicast proxy node in the each domain;
sending, by the multicast source node, a bit indexed explicit replication, BIER, multicast message obtained through BIER encapsulation to the multicast proxy node; and
sending, by the multicast proxy node, the BIER multicast message to the one common node.

2. The multicast cross-domain method of claim 1, wherein the dividing the nodes in the each domain of the multi-domain network into the multicast proxy node and the common nodes comprises:
selecting a domain border node as the multicast proxy node, taking nodes other than the multicast proxy node in the each domain as the common nodes, and configuring a node number for the multicast proxy node; and
notifying the node number to other nodes in the each domain and a border node in a neighboring domain.

3. The multicast cross-domain method of claim 2, wherein sending, by the one common node of the common nodes, the subscription request to the multicast source node outside the each domain through the multicast proxy node in the each domain, and sending, by the multicast source node, the BIER multicast message obtained through the BIER encapsulation to the multicast proxy node comprises:
determining whether the one common node is in a same domain as the multicast source node subscribed by the one common node;
in response to determining that the one common node is not in the same domain as the multicast source node subscribed by the one common node, performing the following operations:
initiating, by the one common node, the subscription request to the multicast proxy node, wherein the subscription request comprises multicast source information and about the multicast proxy node;
receiving, by the multicast proxy node, the subscription request, and sending, by the multicast proxy node as a multicast receiving end, the subscription request to the multicast source node through a border gateway protocol, BGP; and
encapsulating, by the multicast source node, a multicast stream to be sent into the BIER multicast message, wherein a BIER header of the BIER multicast message comprises bit information of the multicast proxy node.

4. The multicast cross-domain method of claim 3, wherein sending, by the multicast proxy node, the BIER multicast message to the one common node comprises:
receiving, by the multicast proxy node, the BIER multicast message, striping the BIER header from the BIER multicast message, and sending the multicast message without the BIER header to the one common node.

5. A multicast cross-domain device, comprising:
a proxy configuration module, which is configured to divide nodes in each domain of a multi-domain network into a multicast proxy node and common nodes;
a cross-domain request module, which is configured to send a subscription request to a multicast source node outside the each domain by one common node of the common nodes through the multicast proxy node in the each domain, and send a bit indexed explicit replication, BIER, multicast message obtained through BIER encapsulation to the multicast proxy node by the multicast source node; and
a message sending module, which is configured to send the BIER multicast message to the one common node by the multicast proxy node.

6. The multicast cross-domain device of claim 5, wherein the proxy configuration module comprises:
a dividing unit, which is configured to select a domain border node as the multicast proxy node, take nodes other than the multicast proxy node in the each domain as the common nodes, and configure a node number for the multicast proxy node; and
a notification unit, which is configured to notify the node number to other nodes in the each domain and a border node in a neighboring domain.

7. The multicast cross-domain device of claim 6, wherein the cross-domain request module comprises:
a determination unit, which is configured to determine whether the one common node is in a same domain as the multicast source node subscribed by the one common node;
a first request unit, which is configured to: when the one common node is not in the same domain as the multicast source node subscribed by the one common node, initiate the subscription request to the multicast proxy node through the one common node, wherein the subscription request comprises multicast source information and information about the multicast proxy node;
a second request unit, which is configured to: after the multicast proxy node receives the subscription request, send the subscription request to the multicast source node through a border gateway protocol, BGP, as a multicast receiving end by the multicast proxy node; and
an encapsulation feedback unit, which is configured to encapsulate a multicast stream to be sent into the BIER multicast message through the multicast source node, wherein a BIER header of the BIER multicast message comprises bit information of the multicast proxy node.

8. The multicast cross-domain device of claim 7, wherein the message sending module is configured to: after the multicast proxy node receives the BIER multicast message, enable the multicast proxy node to strip the BIER header from the BIER multicast message through the multicast proxy node and send the multicast message without the BIER header to the one common node through the multicast proxy node.

9. A multicast cross-domain system, comprising a memory, a processor and at least one application stored in the memory and configured to be executed by the processor, wherein the application is configured to execute the multicast cross-domain method of any one of claims 1 to 4.

10. A computer-readable storage medium, which is configured to store computer programs for implementing the multicast cross-domain method of any one of claims 1 to 4 when the computer programs are executed by a processor.
